# EUROPÄISCHE PATENTSCHRIFT

(11) **EP 0 674 829 B1**
(45) Veröffentlichungstag und Bekanntmachung des Hinweises auf die Patenterteilung: **20.09.2000**
(21) Anmeldenummer: 95102387.8
(22) Anmeldetag: 21.02.1995
(51) Int. Cl.: A01B 29/04

(54) **Nockenwalze**
Cam roller
Rouleau à cames

(30) Priorität: 02.03.1994 DE 4406802
(43) Veröffentlichungstag der Anmeldung: 04.10.1995
(73) Patentinhaber: HOWARD Landmaschinen Innovation GmbH, 29664 Walsrode (DE)
(72) Erfinder: Brockmöller, Fritz, 29683 Fallingbostel (DE)
(74) Vertreter: Einsel, Robert, Dipl.-Ing.

(56) Entgegenhaltungen:
- US-A- 4 016 934

## Beschreibung

Die Erfindung betrifft eine Nockenwalze mit ein oder mehreren radförmigen Nockenringen, an deren äußeren Umfang eine Vielzahl von im wesentlichen senkrecht zur Radebene angeordneten Nocken vorgesehen sind (siehe z.B. US-A-4016934). Mehrere solcher Räder können auf einer Welle nebeneinander so befestigt werden, daß sie insgesamt einen walzenförmigen Hohlkörper bilden, der in einen üblichen Rahmen einsetzbar und mittels eines Traktors oder dergleichen zur Feldbearbeitung eingesetzt werden kann. Solche Nockenwalzen sind in der Landwirtschaft bekannt. Bei ihnen bestehen die Räder meist aus Gußstahl und die Nocken sind zusammen mit dem Radkörper aus einem Stück gefertigt. Die vielzahl der verwendeten Räder bewirkt ein erhebliches Gewicht der Walze. Wenn eine so schwere und zu einem Stück zusammengebaute Walze über das Feld bewegt wird und ein Nocken über einen erhöht liegenden Stein rollen muß, liegt praktisch das ganze Gewicht der Walze auf dieser einen Nocke. Gerade bei dem für diesen Anwendungsfall gern benutzten Stahlguß ist mit dem Abbrechen der jeweiligen Nocke zu rechnen. Das wiederum hat den Ausbau der Walze zur Folge, weil nur so das betroffene Rad ausgewechselt werden kann. Außerdem leiden solche Nockenwalzen unter dem Nachteil, daß sich der Innenraum mit Erde, Steinen, Stroh oder sonstigem Unrat. zusetzen kann. Bei anderen Walzen, den sogenannten Stabwalzen, sind Mittel bekannt, die diesem Problem abhelfen sollen. ( P 28 18 718). Diese bekannten Mittel sind jedoch bei einer Nockenwalze nicht anwendbar.

Der Erfindung liegt die Aufgabe zugrunde, eine verbesserte Nockenwalze zu schaffen.

Diese Aufgabe wird durch die im Anspruch 1 definierte Erfindung gelöst. Weiterbildungen der Erfindung sind in den Unteransprüchen definiert.

Durch die Erfindung wird eine Nockenwalze geschaffen, die den Vorteil der Selbstreinigung während des Betriebs bietet und dies mit verbesserten Laufeigenschaften der Walze und/oder verringerter Schadensanfälligkeit kombiniert.

Im Prinzip wird eine Nockenwalze mit einem radförmigen Körper geschaffen, bei der die Nocken zylinderförmige Teile enthalten die beweglich in über den Radumfang verteilt angeordneten Bohrungen, Öffnungen oder dergleichen schwenkbar gelagert sind. Auf den zylinderförmigen Teilen sind Formteile befestigt, z.B. aufgeschrumpft, deren Profil kreisförmig, elliptisch, dreieckig, ei-förmig sein kann oder eine andere, dem jeweiligen Anwendungszweck angepaßte Form haben kann und die als Nocken dienen. Die Formteile können für die aus den Bohrungen auf den beiden Seiten des Rades herausragenden Zylinder-Enden unterschiedliche Form und/oder Länge haben. So ist es möglich, jedes Rad mit einer Unsymmetrie der Nocken auf den beiden Seiten des Rades zu gestalten. Benachbarte Räder werden so zusammengesetzt, daß lange Nocken oder Formteile eines Rades kurzen Nocken oder Formteilen des jeweils benachbarten Rades gegeüberliegen. Eine so gebildete Walze weist daher eine aus Radumfängen und seitlich abstehenden abwechselnd schweren und leichteren Nocken gebildete Mantelfläche auf. Diese in jedem Fall beweglichen Nocken werden im Betrieb oberhalb des Erdreichs, aber auch bei der Bodenbearbeitung sich beweglich den auf sie einwirkenden Kräften anpasssen. Beim Abrollen der Walze auf dem Boden werden die Nocken in den Boden gedrückt. Sollte eine Nocke durch einen Stein oder dergleichen plötzlich die Last der ganzen Walze tragen müssen, so wird das entsprechende Formteil zunächst infolge seiner Beweglichkeit nachgeben und bei noch weiterer Belastung verbiegen, ohne zu brechen. Das beruht auf der Verwendung eines vorgefertigten, einsetzbaren Zylinderteils. Dieses kann beispielsweise ein Stahlrohr enthalten, das im Gegensatz zu Graugußteilen (GG) weitgehend biegbar ist. Sollte das Zylinderteil schließlich bei zu großer Belastung doch brechen, so muß nicht das gesamte Rad ausgebaut werden, sondern nur das eine Zylinderteil mit den Formteilen. Es ist aber auch möglich, einen Stab aus einem biegbaren Kunststoff zu verwenden. Dieser könnte als Vollstab ausgebildet sein und einfach eingesetzt werden, indem er in die Öffnung gezogen wird, dabei seinen Durchmesser verringert, ihn aber bei Nachlassen des Zuges wieder vergrößert und so fest in der Öffnung sitzt. Ein solcher Kunststoffstab hätte den Vorteil, daß beide Enden unabhängig voneinander geschwenkt werden können. Eine so aus vielen Rädern , z.B. 16-18, zusammengesetzte Walze bewirkt durch ihre beweglichen Nocken eine sichere und ununterbrochene Bodenbearbeitung. Darüberhinaus hat sie einen vorteilhaften Selbstreinigungseffekt, da die beweglichen Nocken durch das Gewicht der in den Innenraum der Walze gelangten Fremdkörper geschwenkt werden, dadurch eine Öffnung bilden und die Fremdkörper durch diese Öffnung(en) wieder auf dem Boden verteilen. Dies ist insbesondere dann der Fall, wenn Räder mit unsymmetrischen Nocken verwendet werden. Dann schwenken nämlich die schweren Nocken in eine Richtung und die leichten Nocken in die jeweils andere Richtung und bilden so eine größere Öffnung zwischen den einander gegenüberliegenden Nocken. Die Schwenkrichtung hängt ab von den jeweils einwirkenden Kräften wie Gewicht der Fremdkörper, Gewicht der Nocken und eine Zentrifugalkraft der sich drehenden Walze. Abstreifer oder dergl. wie ortsfest gelagerte elastische Finger, die in Laufrichtung hinter der Auflage der Walze zwischen die Räder greifen, geben den Nocken jeweils einen kurzen Impuls und fördern die Reinigung der Nocken selbst.

Ein weiterer Vorteil der so mit Öffnungen für die Aufnahme der Nocken versehenen Räder ist ihre vielseitige Verwendungsmöglichkeit und daher auch eine vereinfachte Lagerhaltung im Gerätepark Diese Räder können nämlich nicht nur mit auswechselbaren Nocken bestückt werden, sondern auch mit Stäben von Stabwalzen, die wegen anderer Vorteile gleichfalls verwendet werden sollen.

Zur näheren Erläuterung werden im folgenden mehrere Ausführungsbeispiele der Erfindung anhand der Zeichnungen beschrieben. Diese zeigen in:
- Fig. 1: eine Seitenansicht eines Rades für eine Nockenwalze gemäß der Erfindung,
- Fig. 2: einen Querschnitt durch das Rad gemäß Fig. 1,
- Fig. 3: eine Abwandlung der in Fig. 2 dargestellten Nocken, abwechselnd starren Stäben und Ketten,
- Fig. 4: eine vergrößerte Detailansicht der Nocken in der Öffnung des Rades,
- Fig. 5: eine aus Rädern und Nocken gemäß Fig. 1 - Fig. 4 zusammengesetzten Nockenwalze

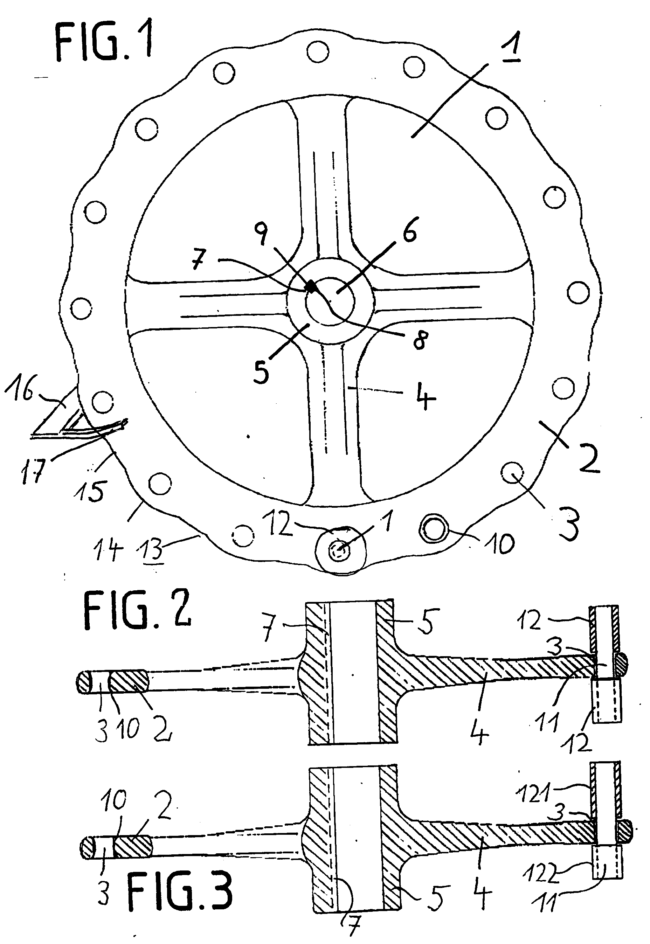

In **Fig. 1** ist ein Rad 1 für eine Nockenwalze dargestellt, das im wesentlichen aus einem Ring 2 mit Öffnungen 3 für die Aufnahme von Nocken oder dergleichen besteht. Der Ring 2 ist über Speichen 4 mit einer Nabe 5 verbunden, durch die eine Welle 6 der Nockenwalze geführt ist. In der Welle 6 und in der Nabe 5 sind Nuten 7,8 und ggf. ein Mitnahmestab 9 vorgesehen. Die Nuten dienen im wesentlichen der Selbstreinigung der Welle, können aber auch für einzelne Räder zur Aufnahme der Stäbe 9 dienen, um eine gemeinsame Drehung von Welle 6 und einzelnen Rädern 1 zu bewirken. Die Öffnungen 3 sind zu ihren Enden 10 hin gerundet oder aufgeweitet, so daß ein in die Öffnung 3 eingesetzter zylindrischer Stab 11 mit darauf befestigten Nocken 12 in alle Richtungen schwenkbar ist. Das soweit beschriebene Rad 1 ist vorzugsweise als Gußteil (GG) mit bereits darin enthaltenen Öffnungen 3 vorgefertigt . Der Umfang 13 des Rades 1 ist wellenförmig ausgebildet, damit die den Nocken 12 zugeordneten Umfangsteile 14 gegenüber den dazwischen liegenden Umfangsteilen 15 nach außen versetzt sind. Durch die Wellenform des Umfangs 13, durch die Form des Ringes 2 und der Speichen 4 sowie durch die bereits beim Guß berücksichtigten Öffnungen 3 wird eine Materialersparnis bei der Herstellung des Radkörpers 1 erreicht. Durch die Wellenform des Umfangs 13 wird darüber hinaus noch erreicht, daß die für das Abrollen der Nockenwalze maßgebliche Walzenoberfläche mehr durch die Nocken 12 als durch den Umfang des Ringes 2 gebildet wird.

Der zylindrische Stab 11 ist vorzugsweise ein Stahlrohr oder auch ein Kunststoffstab. Die Nocken 12 können in nahezu jeder gewünschten Form, also beispielsweise zylinderförmig, dreieckförmig, Ei-förmig oder rautenförmig vorgefertigt werden mit einer zum Aufschieben oder Aufschrauben auf den zylindrischen Stab 11 vorbereiteten Öffnung. Die Nocken 12 können auf den Stäben 11 durch Schrauben, Muttern, Schweißen oder Schrumpfen befestigt werden.

Am linken Bildrand ist neben dem im Uhrzeigersinn rotierenden Rad 1 ein Abstreifer 16 mit in den Bewegungsbereich der Nocken 12 ragenden Fingern 17 angedeutet. Diese sind vorzugsweise aus einem elastischen, widerstandsfähigen Kunststoff gefertigt. Bei der Rotation des Rades 1 gelangen die Nocken 12 an die Unterseite der Finger 17, heben diese hoch, werden dabei durch die Federkraft der Finger 17 in eine Endlage gedrückt, gelangen bei weiterer Rotation wieder aus dem Bereich der Finger 17 und schnellen impulsartig in die andere Lage zurück. Dabei werden evtl. noch anhaftende Erdkluten oder dergl. abgestreift und abgeworfen.

**Fig. 2** zeigt eine geschnittene Seitenansicht des in Fig. 1 dargestellten Rades 1 mit einem in die Öffnung 3 an der rechten Seite der Zeichnung eingesetzten zylindrischen Stab 11, Rohr oder dergleichen, auf den zwei gleich lange Nocken 12 gleichen Außendurchmessers aufgeschraubt sind. Eine zusätzliche Befestigung der Nocken 12 auf dem Stab 11 ist nicht dargestellt, aber möglich. Die Öffnung 3 auf der rechten Seite der Zeichnung ist mit zylindrischem Verlauf dargestellt und hat einen Durchmesser, der soviel größer ist als der Durchmesser des Stabes 11, daß dieser relativ frei in der Öffnung 3 geschwenkt werden kann. Die Öffnung 3 an der linken Seite der Zeichnung ist so abgerundet, daß ihr Durchmesser im mittleren Bereich kleiner ist als an der Außenseite 10. Diese Form der Öffnung erlaubt eine noch bessere Schwenkung der Stäbe in der Öffnung. Diese Form der Öffnung ist auch günstig für die Verwendung von Stäben 11 aus Gummi, Kunststoff oder dergl. um bei solchen Stäben das Entstehen von Kerben, Sollbruchstellen oder dergl.zu vermeiden.

**Fig. 3** zeigt eine Abwandlung der in Fig. 2 dargestellten Anordnung. In. Fig. 3 sind die Nocken 12 asymmetrisch bemessen. Die Nocke 121 auf der oberen Seite des Rades 1 ist wesentlich länger bemessen als die Nocke 122 auf der unteren Seite des Rades. Die Länge der längeren Nocke 121 ist aber vorzugsweise nicht größer bemessen als es der Länge der Nabe 5 entspricht, damit sich Nocken 121 von auf einer gemeinsamen Welle 6 angeordneten Rädern 1 nicht berühren können.

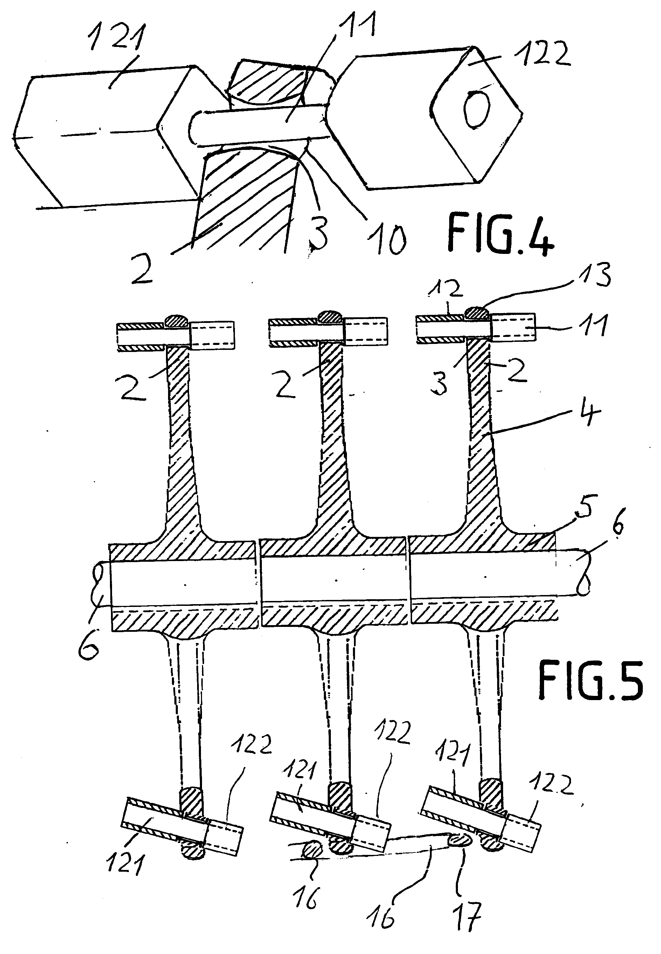

In **Fig. 4** ist eine Öffnung 3 mit darin eingesetzter Nockenanordnung 11, 12 im Detail und in geschwenkter Postion dargestellt.

**Fig. 5** zeigt eine aus mehreren Rädern 1 zusammengesetzte Nockenwalze mit asymmetrisch bemessenen Nocken 12. Am oberen Ende der Walze sind die einzelnen Nocken in waagerechter Postion dargestellt und die im Betrieb vorherrschende Kraftrichtung in Form von Pfeilen. Im unteren, gerade auf dem Boden abrollenden Bereich sind die Nocken 121 und 122 so dargestellt, wie sie im üblichen Betrieb in die Bodenkrume eingreifen. Dabei wird die längere Nocke 121 infolge ihrer größeren Oberfläche weniger tief in den Boden eindringen als die kürzere Nocke 121. Festere Bestandteile des Bodens können dieses üblichen verhalten jedoch von Nocke zu Nocke verändern. Durch die Beweglichkeit der Nocken 12 können sich Steine nicht mehr oder kaum noch zwischen benachbarten Nocken festklemmen.

Die Räder 1 sind auf einer gemeinsamen Welle 6 angeordnet. Sie können zwar ohne Zwischenlage von Abstandscheiben dicht nebeneinander angeordnet sein, doch fördern glatte Abstandscheiben aus Stahl oder dergleichen die Relativbewegungen der Räder 1 zueinander. Soche Relativbewegungen sind erforderlich, um die Kurvengängigkeit der Walze zu verbessern. Zusätzliche Abstandscheiben sind nicht erforderlich, wenn die Naben 5 selbst entsprechend ausgebildet sind oder sein können. Abstandscheiben können aber mit Vorteil eingesetzt werden, wenn die Zahl der Räder variiert werden soll, beispielsweise, um die durch die Nocken 12 bewirkten Öffnungen zu vergrößern. Dann wird beispielsweise die Zahl der Räder von 18 auf 16 verringert.

Die Befestigung der Welle 6 kann durch Muttern und Kontermuttern oder dergleichen an den Enden der einzigen, durchgehenden Welle 6 bewirkt werden. Die Welle 6 kann in üblicher Weise in den Rahmen der Nockenwalzenanordnung eingestzt und dort drehbar gelagert werden. Dieselbe Rahmenanordnung ist so bemessen, daß sie auch für andere Walzentypen wie Stabwalzen verwendet werden kann. Im Betrieb können daher nacheinander je nach Gebrauchsnotwendigkeit die eine oder die andere Walze eingesetzt werden, ohne daß die Gesamtanordnung abgekuppelt werden muß.

Es ist auch möglich, im Rahmen zwei Wellenstümpfe drehbar zu lagern und die Welle 6 dort nur einzupassen.

Wegen der Beweglichkeit der Nocken 12 und der Räder 1 ist es auch möglich, daß die Räder 1 einer solchen Nockenwalze sich ständig gegeneinander so verdrehen, daß die Nocken längs des Umfangs nicht nebeneinander liegen, sondern gegeneinander versetzt sind. Da die Nocken praktisch die Auflagestellen auf dem Boden bilden, würde die Zahld der Bodenkontaktstellen wesentlich erhöht und damit die Laufruhe der Nockenwalze verbessert werden. Dadurch wird nämlich einerseits infolge der erhöhten Zahl der Auflagestellen auf dem Boden ein gleichmäßiges und daher ruhiges Abrollen der Walze ermöglicht, andererseits aber auch ein resonanzartiges Aufschaukeln der Nockenwalze 1 vermieden. Dies wäre nämlich bei gleichen Abständen aller nicht versetzten Nocken 12 beim Abrollen mit einer bestimmten Geschwindigkeit zu befürchten. Diese Versetzung der Nocken 12 wurde ständig die Größe einiger der für die ständige Selbstreinigung der Nockenwalze vorgesehenen Öffnungen erhöhen, andrerseits aber auch Öffnungen verkleinern. Durch den ständigen Wechsel der Öffnungsgröße aller Öffnungen wäre die Verbesserung der Selbstreinigung effektiv für alle Öffnungen.

Bei dem Betrieb einer Nockenwalze, beispielsweise als Krumenpacker bei der landwirtschaftlichen Bodenbearbeitung, können sich bei entsprechenden Bodenverhältnissen, beispielsweise bei großer Nässe, zwischen starre Nocken Erdkluten oder auch Steine setzen. Diese müssen entfernt werden, da sich diese Fremdbestandteile sonst in dem Hohlkörper der Stabwalze 1 anlagern und ansammeln und den Hohlkörper zunehmend zusetzen würden. Das Gewicht einer solchen gefüllten Nockenwalze würde das für den praktischen Betrieb zulässige Höchstgewicht weit übersteigen und die Funktionsweise und das Arbeitsergebnis beeinträchtigen. Da ein Reinigen von Hand sehr arbeits- und zeitaufwendig ist, ist die Nockenwalze gemäß Fig. 5 so bemessen, daß sie sich während des Betriebes selbst reinigt. Dies bedeutet, daß sie aufgrund ihrer Konstruktion das Eindringen von Erdkluten oder dergleichen unterbindet oder in das Innere des Hohlkörpers gelangte Erdkluten oder Steine direkt wieder aus dem Hohlkörper hinaus transportiert. Beides wird durch eine Nockenwalze gemäß Fig. 5 erreicht.

## Patentansprüche

1. Nockenwalze mit ein oder mehreren radförmigen Nockenringen, an deren äußerem Umfang eine Vielzahl von im wesentlichen senkrecht zur Radebene angeordnete Nocken vorgesehen sind, **dadurch gekennzeichnet**, **daß** in dem radförmigen (1) Nockenring (2) im Bereich des Umfangs (13) Öffnungen (3) vorgesehen sind, die im wesentlichen in Achsrichtung des Rades (1) angeordnet sind, daß in die Öffnungen (3) zylinderförmige Stäbe (11), Rohre oder dergleichen mit einem Schwenkbewegungen zulassenden Spiel eingesetzt sind, und daß mit jedem Ende des Stabes (11), Rohres oder desgleichen eine Nocke (12, 121,122) kraftschlüssig verbunden ist.

2. Nockenwalze nach Anspruch 1, **dadurch gekennzeichnet**, **daß** die Stäbe (11) so lang bemessen sind, daß sie an beiden Seiten des Ringes (2) aus den Öffnungen (3) herausragen, daß die Nocken (12) eine dem Durchmesser der Stäbe (11) angepaßte Bohrung, Öffnung oder dergleichen haben und daß die Nocken (12) auf den aus den Öffnungen (3) ragenden Enden der Stäbe (11) angeordnet und befestigt sind.

3. Nockenwalze nach Anspruch 1 oder 2, **dadurch gekennzeichnet**, **daß** die Nocken (12) rundes, kreisförmiges, elliptisches oder eckiges Profil haben.

4. Nockenwalze nach Anspruch 1,2 oder 3, **dadurch gekennzeichnet**, **daß** die Nocken (12) auf der einen Seite des Rades (1) länger bemessen sind als auf der anderen Seite desselben Rades (1)

5. Nockenwalze nach Anspruch 1,2,3 oder 4, **dadurch gekennzeichnet**, **daß** die Öffnungen (3) einen Durchmesser haben, der größer ist als der Durchmesser der Stäbe (11).

6. Nockenwalze nach einem der Ansprüche 1 bis 5, **dadurch gekennzeichnet**, **daß** der Durchmesser der Öffnungen (3) zu den Außenseiten des Rades (1) hin größer wird.

7. Nockenwalze nach einem der Ansprüche 1 bis 6, **dadurch gekennzeichnet**, **daß** der die Öffnungen (3) gerundet sind.

8. Nockenwalze nach einem der Ansprüche 1 bis 7, **dadurch gekennzeichnet**, **daß** mehrere Räder (1) auf einer gemeinsamen Welle (6) angeordnet und befestigt sind.

9. Nockenwalze nach Anspruch 8, **dadurch gekennzeichnet**, **daß** die Räder (1) so gegeneinander verdreht sind, daß die Nocken (12) benachbarter Räder (1) gegeneinander versetzt angeordnet sind.

10. Nockenwalze nach einem der Ansprüche 1 bis 9, **dadurch gekennzeichnet**, **daß** der Umfang (13) des Rades oder der Räder (1) wellenförmig ausgebildet ist und daß die Welle an der Stelle der Nocken nach außen gewölbt ist.

11. Nockenwalze nach einem der Ansprüche 1 bis 10, **dadurch gekennzeichnet**, **daß** dem Umfang (13) des Rades (1) oder der Räder (1) fingerartige Abstreifer (16) zugeordnet sind, die in Laufrichtung hinter dem oder den Rädern (1) angeordnet sind und in den Weg der Nocken (12) so eingreifen, daß die Nocken (12) bei der Bewegung die Finger bewegen oder verbiegen und danach impulsartig entlastet werden.

## Claims

1. A cam roller including one or more wheel-like cam rings on the outer periphery of which there are provided a plurality of cams arranged substantially perpendicularly to the plane of the wheel, characterised in that openings (3) are provided in the wheel-like (1) cam ring (2) in the vicinity of the periphery (13) whereby said openings are arranged substantially in the axial direction of the wheel (1), in that cylindrical rods 11, tubes or the like are inserted in the openings (3) with a degree of play allowing swinging movements, and in that a cam (12, 121, 122) is coupled to each end of the rod (11).

2. A cam roller in accordance with Claim 1, characterised in that the lengths of the rods (11) are such that they project out of the openings (3) at both sides of the ring (2), in that the cams (12) have a boring, opening or the like adapted to the diameter of the rods (11), and in that the cams (12) are arranged on and fixed to the ends of the rods (11) projecting out of the openings (3).

3. A cam roller in accordance with Claim 1 or 2, characterised in that the cams (12) have a round, circular, elliptical or angular profile.

4. A cam roller in accordance with Claim 1, 2 or 3, characterised in that the lengths of the cams (12) at one side of the wheel (1) are greater than they are at the other side of the self-same wheel (1).

5. A cam roller in accordance with Claim 1, 2, 3 or 4, characterised in that the diameter of the openings (3) is greater than the diameter of the rods (11).

6. A cam roller in accordance with any of the Claims 1 to 5, characterised in that the diameter of the openings (3) is greater towards the outer sides of the wheel (1).

7. A cam roller in accordance with any of the Claims 1 to 6, characterised in that the openings (3) are rounded.

8. A cam roller in accordance with any of the Claims 1 to 7, characterised in that a plurality of wheels (1) are arranged on and fixed to a common shaft (6).

9. A cam roller in accordance with Claim 8, characterised in that the wheels (1) are mutually twisted such that the cams (12) of neighbouring wheels (1) are mutually offset.

10. A cam roller in accordance with any of the Claims 1 to 9, characterised in that the periphery (13) of the wheel or the wheels (1) is undulating, and in that the undulation is outwardly domed at the location of the cams.

11. A cam roller in accordance with any of the Claims 1 to 10, characterised in that finger-like strippers (16) are associated with the periphery (13) of the wheel (1) or the wheels (1), said strippers being arranged behind the wheel or wheels (1) in the direction of motion and engaging in the path of the cams (12) in a manner such that the cams (12) will move or bend the fingers during the movement and thereafter be relieved of strain in impulsive manner.

## Revendications

1. Rouleau à cames avec un ou plusieurs anneaux à cames en forme de roues, sur la périphérie extérieure desquels est prévue une pluralité de cames disposées essentiellement perpendiculairement au plan de la roue, **caractérisé** en ce que des ouvertures (3) sont prévues dans la région de la périphérie (13) dans l'anneau (2) à cames en forme de roue (1), ouvertures qui sont disposées essentiellement dans la direction axiale de la roue (1), en ce que des barreaux (11) cylindriques, tubes ou analogues sont insérés dans les ouvertures (3) avec un jeu autorisant des mouvements de pivotement, et en ce qu'une came (12, 121, 222) est assemblée à force à chaque extrémité du barreau (11).

2. Rouleau à cames selon la revendication 1, **caractérisé** en ce que les barreaux (11) sont dimensionnés suffisamment longs pour qu'ils dépassent des ouvertures (3) sur les deux côtés de l'anneau (2), en ce que les cames (12) possèdent un perçage, orifice ou analogue adapté au diamètre des barreaux (11), et en ce que les cames (12) sont disposées et fixées sur les extrémités des barreaux (11) qui dépassent des ouvertures (3).

3. Rouleau à cames selon la revendication 1 ou 2, **caractérisé** en ce que les cames (12) possèdent un profil rond, circulaire, elliptique ou angulaire.

4. Rouleau à cames selon la revendication 1, 2 ou 3, **caractérisé** en ce que les cames (12) sont dimensionnées plus longues sur un côté de la roue (1) que sur l'autre côté de la même roue (1).

5. Rouleau à cames selon la revendication 1, 2, 3 ou 4, **caractérisé** en ce que les ouvertures (3) possèdent un diamètre qui est supérieur au diamètre des barreaux (11).

6. Rouleau à cames selon une des revendications 1 à 5, **caractérisé** en ce que le diamètre des ouvertures (3) augmente en direction des côtés extérieurs de la roue (1).

7. Rouleau à cames selon une des revendications 1 à 6, **caractérisé** en ce que les ouvertures (3) sont arrondies.

8. Rouleau à cames selon une des revendications 1 à 7, **caractérisé** en ce que plusieurs roues (1) sont disposées et fixées sur un arbre commun (6).

9. Rouleau à cames selon la revendication 8, **caractérisé** en ce que les roues (1) sont tournées les unes par rapport aux autres de telle sorte que les cames (12) de roues voisines (1) sont disposées en décalage mutuel.

10. Rouleau à cames selon une des revendications 1 à 9, **caractérisé** en ce que la périphérie (13) de la roue ou des roues (1) est réalisée ondulée, et en ce que l'arbre est bombé vers l'extérieur à l'endroit des cames.

11. Rouleau à cames selon une des revendications 1 à 10, **caractérisé** en ce que des racleurs (16) du genre doigts sont associés à la périphérie (13) de la roue (1) ou des roues (1), racleurs qui sont disposés, dans le sens de marche, après la ou les roues (1) et s'engagent dans la voie des cames (12) de telle sorte que les cames (12), lors du déplacement, déplacent ou plient les doigts, puis sont brusquement libérées.
